# EUROPEAN PATENT APPLICATION

(11) **EP 2 991 194 A1**
(43) Date of publication of application: **02.03.2016**
(21) Application number: 14182227.0
(22) Date of filing: 26.08.2014
(51) Int. Cl.: H02K 1/24, H02K 19/00

(54) **Rotor for a current excited synchronous machine**

(71) Applicant: Brusa Elektronik AG, 9466 Sennwald (CH)
(72) Inventor: Illiano, Enzo, 6900 Lugano (CH)
(74) Representative: Patentbüro Paul Rosenich AG

(57) **Abstract**

A rotor (3) for an electrical machine is described, in particular for a current excited synchronous machine, in particular a motor (1). Rotor windings (7) are provided on at least two rotor poles (4), where radial magnetic flux barriers in the form of slots (13) extending radially along the center planes of the poles (4) are provided. Said barriers can be composed by any material, including liquids or gases, in particular air, which has a lower magnetic permeability µr than the rotor poles (4). The radially inner end portion (13a) of the slots (13) is widening up in the direction towards the center axis of the rotor (3).

## Description

The invention relates to a rotor for a current excited synchronous machine, in particular a motor, comprising a rotor core with at least two rotor poles with rotor windings thereon, where radial magnetic flux barriers are provided in the poles, according to the preamble of claim 1.

Pure electric vehicles and electric vehicles with range extender are getting more and more popular. At present, several motor topologies can be used as exclusive drive in full-size electric vehicles. Possible alternatives comprise the asynchronous motor, the internal permanent motor and the current excited synchronous motor, also known as separately excited synchronous motor or externally excited synchronous motor.

Current excited synchronous motors are very promising candidates as traction drives for hybrid and electric vehicles. This topology presents several important advantages compared to other candidates. First of all, it does not contain any rare earth permanent magnet whose price is extremely instable. Secondly, it guarantees an excellent power factor, thus using the whole active power available by the main inverter. To conclude, it allows an excellent peak torque and peak power density compared to other candidate topologies. This corresponds exactly to the characteristics required by a traction motor. In fact, the analysis of a conventional car drive cycle clearly shows that a high peak power is advantageous to increase the driving pleasure (fast accelerations, overtaking operations).

However, this topology has the drawback of providing a lower continuous torque density compared to synchronous motors excited with permanent magnets. Copper losses in the rotor, which are absent in magnet based motors, are the reason for the described lack of performance. The amount of rotor conduction losses is not really significant compared to the whole motor losses and therefore does not significantly affect the efficiency of the system. However, the heat they produce is quite difficult to be removed because the rotor coils are placed in the middle of the motor. Therefore, this can have a negative influence to the continuous power of the motor. Rotor cooling systems are for sure an alternative to solve this problem but these increase the complexity of the system and produce additional frictional losses. In addition, a classical current excited synchronous motor cannot work if an excitation system failure occurs.

The best approach to increase the continuous power of a current excited synchronous motor is a reduction of the rotor losses. To obtain this goal it is necessary to design a rotor which has a very high Ld/Lq ratio (also called saliency of the motor). In addition a large area reserved for the rotor winding must be guaranteed. To obtain this goal it is necessary to build a barrier which stops the magnetic flux in the so called q direction without affecting the magnetic flux lines in d direction.

To increase the saliency of a current excited synchronous motor, GB1245285 and DE4237402 both propose the insertion of a small slot into a monolithic rotor structure thus affecting the magnetic flux lines only in q direction. This approach is very simple but in this case, because of its monolithic construction, the barrier does not cover the whole pole height and therefore its effectiveness is limited. The EP2195907, too, proposes a slot but in combination with a permanent magnet and presents therefore the same drawbacks mentioned above. A current-energized synchronous motor is provided with at least one selective magnetic flux barrier in the form of a radial slot being provided along the main axis of the rotor pole in each rotor pole, aiming at increasing the reluctance moment of the synchronous motor.

The FR2538970 suggests a laminated highly salient structure for the rotor but does not disclose any solution for its practical realization. The GB736701 also suggests the construction of a laminated structure fixed with a nut bolt combination. However, this approach is mechanically critical for modern high speed motors.

The GB566147 finally proposes a rotor shape with three barriers but no solution for a practical realization thereof. In addition, the suggested rotor shape provides a very tiny winding area for the rotor coil which has negative effects on the rotor losses.

The object of the present invention is therefore to further increase the continuous power of a current excited synchronous motor by further reducing the rotor losses.

This is achieved according to the present invention by the features of the independent claim(s). Advantageous further embodiments are disclosed in the drawing figures and in the dependent claims.

A rotor as given in the introductory part of the specification and disclosed in prior art publications has radial magnetic flux barriers provided in the poles and these magnetic flux barriers are slots extending radially along the center planes of the poles, said barriers composed by any material, including liquids or gases, in particular air, which has a lower magnetic permeability µr than the rotor poles.

According to the present invention such a rotor is characterized in that the radially inner end portion of the slots is widening up in the direction towards the center axis of the rotor.

This new proposed rotor construction shows magnetic barriers adapted to further increase the Ld/Lq ratio and to simultaneously assuring the largest possible area for the rotor winding. The barrier according to the present invention optimally stops the magnetic flux in the so called q direction without affecting the magnetic flux lines in particular in the d direction. This increases the reluctance torque of the motor, reduces the required excitation and the losses in the rotor. In this way an enhancement of the continuous motor power and an efficiency improvement are obtained. In addition, the inventive rotor shape allows a partial operation of the motor even if the rotor excitation system is damaged.

Preferably, the flux barriers are widening up essentially continuously towards the center axis of the rotor, preferably in essentially triangular or cusp shape.

Another embodiment of the rotor is characterized in that the inner end portions merge into essentially radial slots of essentially constant width.

Yet another embodiment of a rotor according to the invention is characterized in that the outer end portion of the slots are narrowing in radially outward direction, and are preferably open towards the outside of the rotor.

Preferably, at least one magnet, preferably a permanent magnet, is arranged inside each of the slots, preferably in the central portion thereof.

Advantageously, for the latter embodiment each magnet is oriented dependent from the direction of the field lines in the respective pole.

The magnetic orientation of the permanent magnets can be alternated for adjacent poles.

Any of the above embodiments can be further characterized in that the inner end portion of the slots, preferably also an adjacent portion of the slots, is filled with solid material with a lower magnetic permeability µr than the rotor poles.

Such solid material can be a hard soldering material, cured glue or any other material connecting the rotor poles to the center part of the rotor.

The solid material can form at least one bulge essentially perpendicular to the radial direction and can engage with corresponding recesses in the walls of the slots to constitute a form-lock fixing of the rotor poles to the center part of the rotor.

According to a further embodiment of the inventive rotor, the rotor poles are composed of at least two approximately U-shaped segments with a high magnetic permeability, e.g.: special steel alloys, each of said segments connected with the adjacent segments at least indirectly, the neighboring legs of adjacent U-shaped segments together constituting one rotor pole, where the adjacent segments are separated a certain distance, the gap between the rotor poles constituting the magnetic flux barriers.

Preferably, at least one bridge is connecting and holding at defined distance the opposing walls of the slots, said bridge preferably situated in the center portion of the slot.

A rotor according to any of the above embodiments can be further characterized in that the outer end portions of the legs of the U-shaped rotor segments are provided with magnetic flux barriers composed by any material, including liquids or gases, in particular air, which has a lower magnetic permeability µr than the other portions of the segments.

Such rotor can be further characterized in that the outer end portions of the legs of the U-shaped rotor segments show prominent protrusions towards the opposing leg of the same rotor segment, two adjacent legs of adjacent rotor segments thereby forming mushroom-shaped outer ends of the poles of the rotor, and the magnetic flux barrier arranged in said outer end protrusions.

Finally, radial elements can be provided on the center piece or as parts of a pack of sheet metal supported by or defining the center piece, at least one of these radial elements passing through each of the slots between adjacent rotor segments to the outer perimeter of the rotor. To again assure a better flux barrier effect than known so far, the distance between the rotor segments and the radial elements is widening radially towards the center of the rotor near the inner end portion of the slots. On the other hand, the distance between the rotor segments and the radial elements can be narrowing in radially outward direction, with only a small gap remaining at the outer perimeter of the rotor. With one radial element between adjacent rotor segments, two flux barrier slots are formed, with each additional radial element, the number of flux barriers between adjacent rotor segments increases accordingly.

This invention proposes a new highly salient rotor shape for current excited synchronous motor with an effective magnetic flux barrier and several realization methods thereof. This new highly salient rotor form allows a reduction of the necessary rotor excitation.

Further advantages, features and details of the invention can be gathered from the following specification, describing embodiments of the invention and referring to the drawing figures. The features recited in the claims and in the specification, respectively, can be essential for the invention either individually or in arbitrary combination.

The list of reference numerals is part of the disclosure. The drawing figures are described in correlation and jointly. Same reference numerals are used for same parts. Reference numerals with different indices are used for functionally identical or similar parts.
- Fig. 1: shows a cross-section of a prior art current-energized synchronous motor, with magnetic flux lines;
- Fig. 2: shows a first embodiment of a rotor according to the present invention with a shape to optimally stop magnetic flux in q direction,
- Fig. 3: shows a rotor with permanent magnets inserted in the flux barriers to further increase the effectiveness of the barriers,
- Fig. 4: depicts an embodiment with rotor segments fixed by hard soldering,
- Fig. 5: shows an embodiment with special conical non-magnetic barriers,
- Fig. 6: depicts an embodiment according to the invention comprising a bolt-and-nut fixation,
- Fig. 7: depicts a rotor construction with a bandage surrounding and fixing the rotor segments, in combination with an optional fixation by conical elements,
- Fig. 8: shows an embodiment with two magnetic barriers between each pair of rotor segments,
- Fig. 9: depicts a further embodiment according to the invention with rotor poles without protrusions and with a rotor sleeve,
- Fig. 10: shows an optional embodiment of rotor segments with additional flux barriers in form of holes in the rotor pole protrusions, and
- Fig. 11: depicts a further option for mounting separate rotor segments to a central rotor piece in a fixed and spaced arrangement.

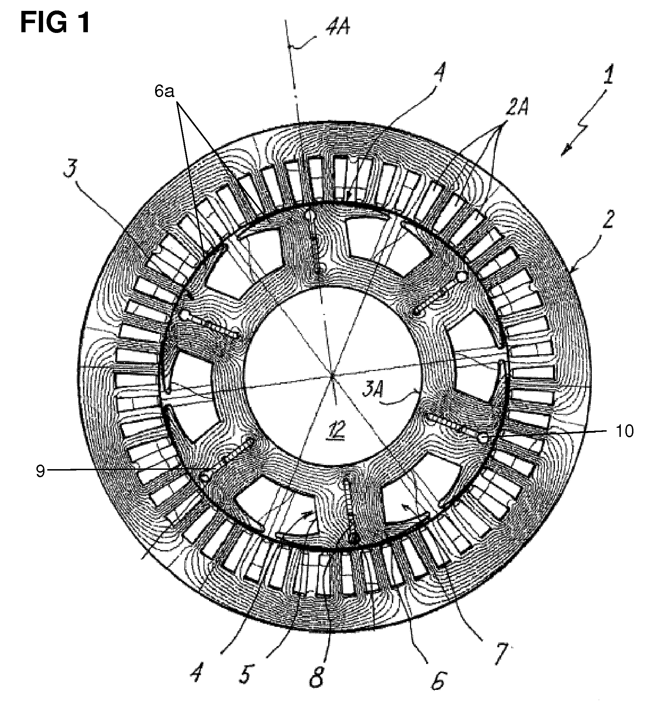

Fig. 1 schematically shows a cross-section of a typical example of a prior art current-energized synchronous motor 1, in particular for use in fully electric or hybrid vehicle drives. The synchronous motor 1 is provided with an external stator 2 and an internal rotor 3. The stator 2 is provided in a manner known per se with grooves for a distributed winding 2A. In the example shown, the rotor 3 has a 6-pole design, while other even numbers of poles are also optionally possible. Fig. 1 illustrates the rotor 3 having salient poles 4 whose pole shank and pole shoe are designated by 5 and 6, respectively. The pole shoe 6 has protrusions 6a in circumferential direction. One energizer winding 7 each, which is arranged along the pole shank 5 and is represented as a cross-sectional area in the drawing, is coordinated with each of the rotor poles 4 in a manner known per se.

As is known per se, at least one selective magnetic flux barrier in the form of a narrow slot 8 with essentially constant width along the main axis 4A of the rotor pole 4 in each rotor pole 4 is provided for increasing the reluctance moment of the current-energized synchronous motor 1. The slots 8 acting as a flux barrier are formed in the pole shanks 5 as central and radial longitudinal openings having substantially parallel lateral surfaces 9. When viewed in the radial direction, the outermost point 10 of the slot 8 is arranged a certain distance from the outer pole surface of the pole shoe 6. The rotor 3 can be composed of a sheet metal lamellae packet preferably fixed together by bolts (not depicted) running parallel to the rotor axis 11, preferably at the position of the outermost points 10, to give a whole rotor unit.

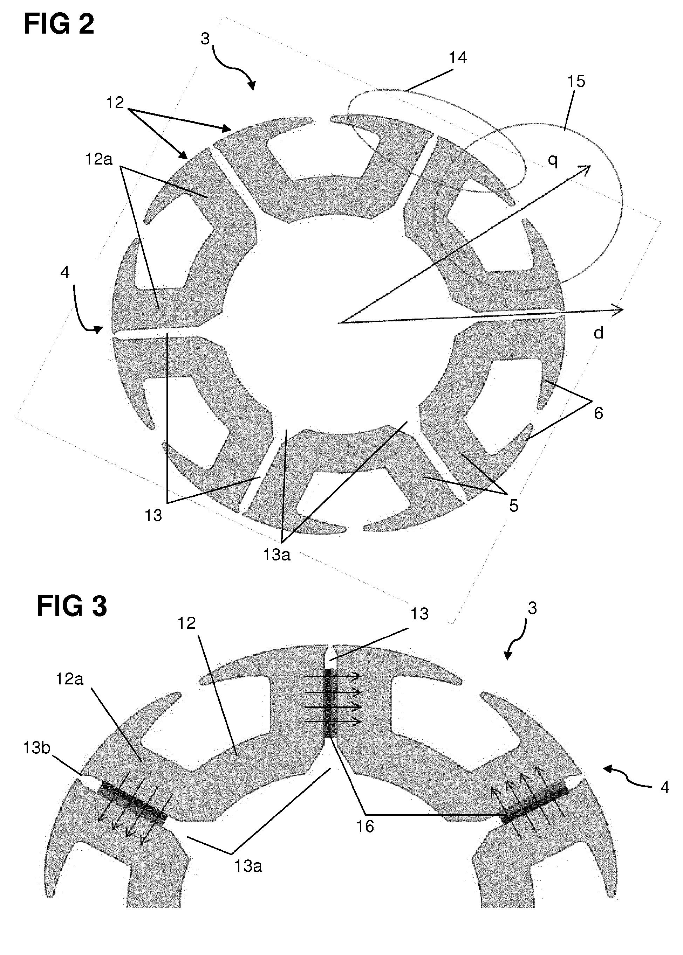

A first basic embodiment of a rotor pole arrangement according to the present invention is shown in Fig. 2. Here, the pole arrangement 4 is composed by several segments 12 with a high magnetic permeability (e.g.: special steel alloys) which are manufactured as separate elements and are at first unconnected to each other. The segments 12 are approximately U-shaped and made of a material with high magnetic permeability, e.g. of special steel alloys. Generally speaking the rotor 3 is composed by a number n of unconnected segments, with n being the number of poles 4 of the rotor 3. For example the rotor 3 shown in Fig. 1 is composed by six poles 4 and therefore the whole shape requires six unconnected segments 12. Each of said segments 12 is at least indirectly connected with the adjacent segments 12, with the neighboring legs 12a of adjacent U-shaped segments together constituting the shanks 5 and shoes 6 of one rotor pole 4.

The realization of a similar structure is challenging because of the huge centrifugal forces caused by the high rotational speed of the rotor 3. Although the construction as described in the following is preferably put into practise with the above described rotor segment 12 arrangement, the same magnetic flux barrier features could with the same effect be provided with compact one-piece rotor arrangements as described for instance in connection with Fig. 1.

A radial slot 13 is provided to form a magnetic flux barrier in the center of each pole 4. With rotor poles 4 composed of the neighboring legs 12a of adjacent U-shaped segments 12, which are arranged to be separated a certain distance, the gap in the center of the rotor poles 4 between adjacent legs 12a is constituting the radial slot 13 acting as the magnetic flux barrier. An interconnection of almost separate segments 12 could be achieved with at least one bridge that is connecting and holding at defined distance the opposing walls of the slots 13, said bridge preferably situated in the center portion of the slot 13.

Independent from the chosen basic structure (separated or connected segments) of the rotor 3, the radially seen inner end portions 13a of the radial slots 13 are widening up in the radial direction towards the center axis of the rotor 3. For this reason, the transitions between the respective leg 12a and the bottom piece of the segment 12 is provided with a chamfered or smoothly rounded outer edge. Thus, the flux barriers formed by the radial slots 13 between the segments 12 of the rotor 3 are widening up essentially continuously towards the center axis of the rotor 3 and have, in cross sectional view parallel to the rotational axis of the rotor 3, preferably and essentially triangular or cusp shape. This essentially triangular shaped inner end portion 13a at the bottom of the motor pole 4 effectively stops the magnetic flux lines in q direction without affecting the field lines in d direction. As shown in Figure 2 the q field lines 14, that would need to cross the slot 13 are attenuated by this flux barrier, while the d field lines 15 do not encounter any obstruction and are guided along the base and legs 12a of the segments 12. While preferably the slot 13 and also its inner end portions 13a are free from any material, the slot 13 and in particular the inner end portion 13a could be filled with any material which has a low relative magnetic permeability µr, in particular lower than the material of the rotor segments 12. The rotor construction as described above allows a large area for the rotor winding provided within the inner volume between the legs 12a of the segments 12, which feature is crucial to obtain low rotor losses.

Optionally, the outer end portion 13b of the slots 13 are narrowing in radially outward direction, and are preferably open towards the outside of the rotor 3.

To further increase the effectiveness of the slots 13 as a magnetic flux barrier, according to a further embodiment of the invention shown in Fig. 3, small permanent magnets 16 are placed inside the slots 13, preferably in the portion with essentially constant width. Typically, these permanent magnets are located in the longitudinal center of the slot 13 and are magnetized in the opposite direction to the field lines which need to be stopped. This allows a far more effective flux barrier effect than any nonmagnetic material or air gap. The magnetization direction of the permanent magnets 16 is preferably alternated between adjacent poles 4 of the rotor 3. The amount of magnets 16 needed to increase the effectiveness of the flux barriers is far smaller than the one required by a permanent magnet motor of the same power class. The direction of the magnetisation of the permanent magnets 16 may be arbitrary, even an at least radial orientation could be provided. The preferred orientation, however, is parallel to the tangential direction to the rotor at the respective location of the magnets 16.

For the fixation of the segments 12 relative to each other and/or the fixation on the central rotor core there are various methods available. Some of them are described as preferred examples in the following paragraphs.

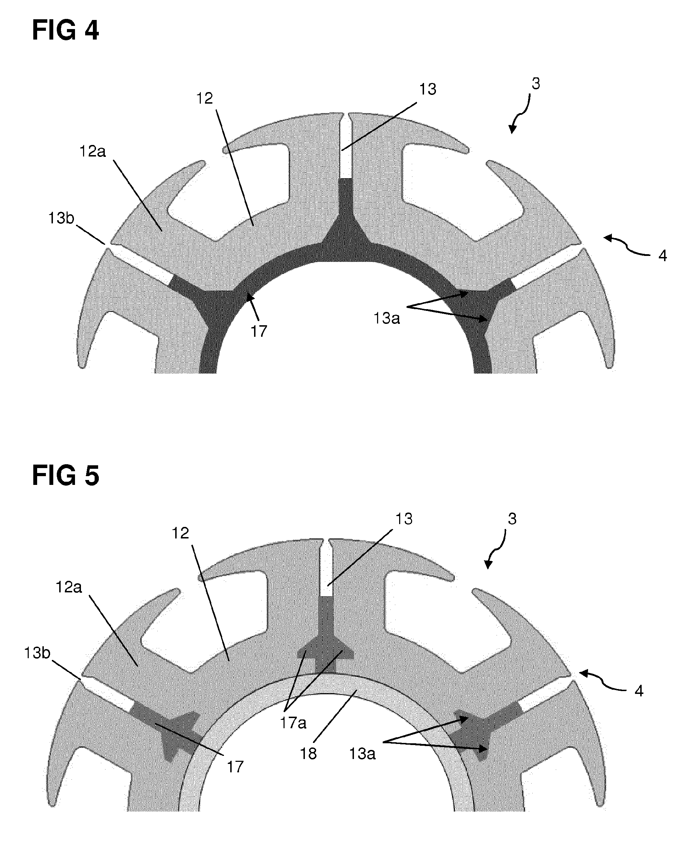

Fig. 4 depicts a first example, where the segments 12 are interconnected with each other and optionally with a magnetically non-conducting axis of the rotor 3 by hard soldering technology. The inner end portion 13a of the slots 13, preferably also an adjacent portion of the slots 13, is filled with the solidified solder material 17, which is chosen to have a lower magnetic permeability µr than the rotor poles 4. Instead of hard soldering any other material connecting the segments 12 to each other and/or the rotor core can be used, in particular cured glue. The vast area along the boundary between the center piece of the rotor 3 and the segments 12 combined with the excellent robustness of hard soldering joints allows high rotational speed without damage to the described structure. And the again essentially triangular shaped inner end portion 13a at the bottom of each pole 4 - which is also present in every of the embodiments explained in the following - assures an optimal flux barrier effect for the magnetic flux lines in q direction.

A further optional embodiment of a rotor 3 according to the present invention and shown in Fig. 5 has segments 12 that show recesses in the outer walls of the base or the legs 12a to form between adjacent segments 12 a radial flux barrier slot 13 with recesses 13c in its side walls. The glue or solder material fills these recesses and after solidification the rigid bulges 17a of the solid material essentially perpendicular to the radial direction fixedly engages with these recesses 13c to constitute a form-lock fixing of the rotor pole segments 12 to for instance a hollow center piece 18 of the rotor 3. Optionally, prefabricated profiles with bulges as described can be inserted axially between adjacent segments 12 and thereby interconnect the segments 12 to form the rotor pole arrangement coaxial to the center piece 18. This can be combined with glue and or hard soldering technology.

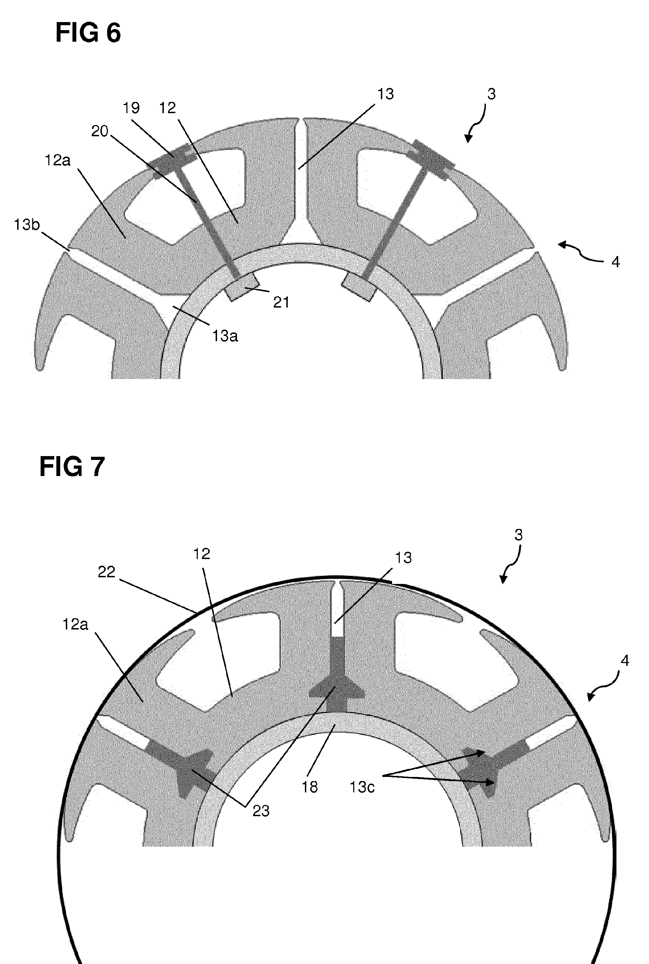

Although know per se, bolting the segments 12 to preferably a hollow center piece 18 can be further developed as shown in Fig. 6 and advantageously used to increase the solidity of the rotor arrangement. An outer profiled closure element 19 could be slid onto opposite edges of the protrusions of the pole shoes 6 and closes the outer opening of the volume for the windings inside each rotor segment 12. From this closure element 19 a bolt 20 runs radially inward and is fixed to the hollow center piece 18 by an inner nut 21. Such, this connection arrangement can both brace the rotor winding and keep the segments 12 together and fixed to the rotor axis.

A very popular solution used to reinforce (high speed) electric motors consists in the use of rotor sleeves 22 as shown in Fig. 7. This approach allows a very simple solution to keep the rotors segments 12 together and pressed onto a hollow center piece 18 or any other center piece of the rotor 3. This fixation method, too, can be combined with other fixation methods described above, with the insertion of conically shaped profiles 23 into correspondingly formed recesses 13c in the slots 13 between the segments 12.

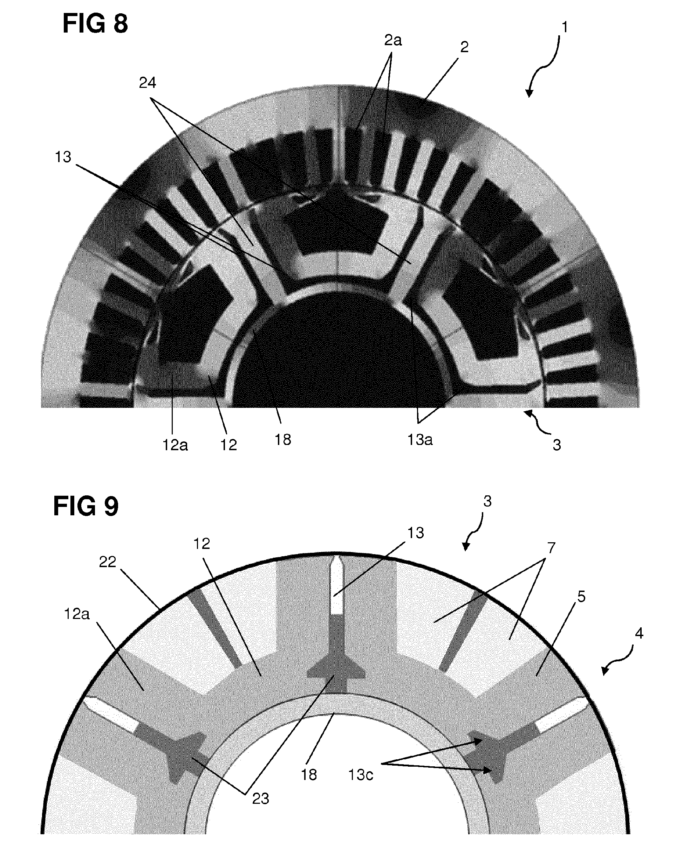

The principle described above for stopping magnetic flux in the q direction can obviously be extended to embodiments with two or more slots 13 within each pole 4 of the rotor 3. An exemplary embodiment thereof is depicted in Fig. 8, additionally showing again also the stator 2 of the synchronous motor 1. The adjacent segments 12 are spaced apart wider than in the previously described embodiments. Within the wide gap between the adjacent legs 12a of the adjacent segments 12 at least one radial element 24, which could be part of a pack of sheet metal supported by the center piece 18, runs from the center piece 18 of the rotor 3 to the outer border of the rotor poles 4. Such, between this - in Fig. 8 only one - radial element 24 preferably in the center of each pole 4 and the adjacent leg 12a of the adjacent segment 12 a flux barrier slot 13 is defined, the radially inner end portion of which widens towards the center of the rotor 3, again mainly by a chamfered edge of the transition between the leg 12a and the bottom piece of the segment 12. And between every pair of adjacent segments 12 of the rotor 3 two radial slots 13 are provided as flux barriers. The fixation of the segments 12 in the compartments defined between neighbouring radial elements can be achieved by any of the above-explained methods or combinations thereof. And in similar manner it is optionally possible to place permanent magnets 16 and/or any material with a low relative permeability coefficient µr in the slots 13 also in the embodiment of Fig. 8. Other possible embodiments could have two or more preferably slot-shaped flux barriers between adjacent segments 12, possibly with additional permanent magnets in at least one of the additional slots 13.

Fig. 9 shows another embodiment based on the same principle as explained so far, but with poles 4 not showing the protrusions 6a at their ends. The pole shanks 5 have essentially the same width all over their height, allowing the winding 7 to be prefabricated and slid onto the pole shanks 5 and therefore to be placed easily and quickly at their end position. To fix the windings 7 to the rotor 2 preferably again one or more rotor sleeves 22 can be provided, with other fixation methods being useable as well. As a fixation method for the segments 12 again the example with profile elements 23 cooperating with corresponding grooves 13c in the base portions of the segments 12 is chosen.

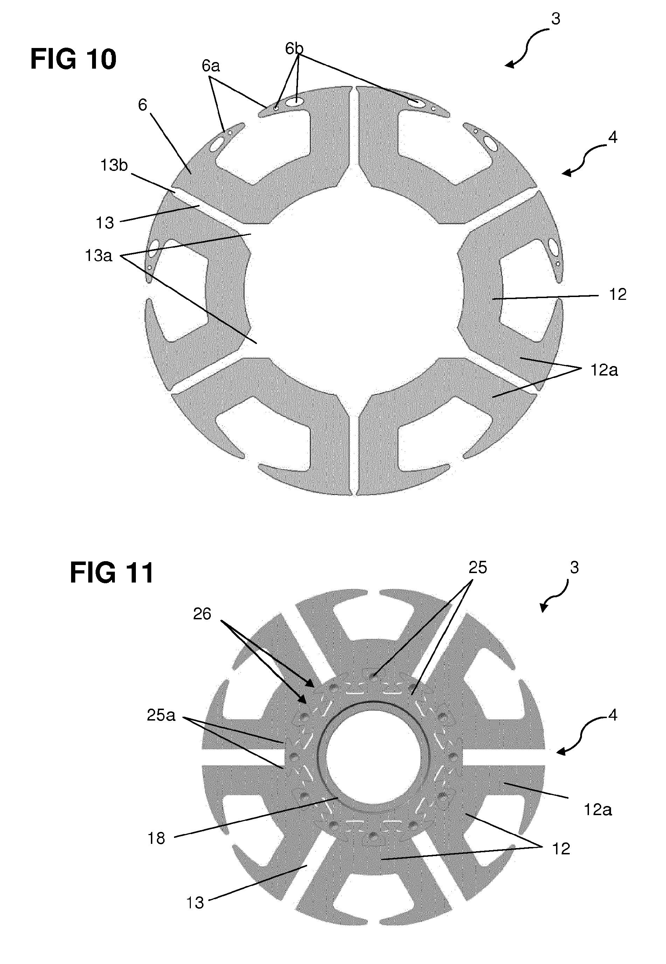

The further embodiment of Fig. 10 of the rotor 3 according to the present invention further develops the idea of a flux barrier for the magnetic flux in q direction. The outer end portions of the legs 12a of the U-shaped rotor segments 12 of the rotor 3 of Fig. 10 are provided with additional magnetic flux barriers composed by any material, including liquids or gases, in particular air, which has a lower magnetic permeability µr than the other portions of the segments 12. For rotors 3 as shown, which have outer end portions of the legs 12a showing prominent protrusions 6a towards the opposing leg 12a of the same rotor segment 12, the magnetic flux barrier arranged in said outer end protrusions 6a is formed by hollows 6b or axial bores in said protrusions 6a. These protrusions 6a of two adjacent legs 12a of adjacent rotor segments 12 are forming mushroom-shaped outer ends or pole shoes 6 of the poles 4 of the rotor 3.

The rotor segments 12 of the embodiment of Fig. 11 are mounted onto for instance a hollow center piece 18 by form-fit connection arrangements, preferably similar to a dove-tail connection. The center piece 18 can - as in any of the other embodiments explained above - consist of a stack of sheet metal plates. Protrusions 25 with ridges 25a on both sides are projecting outward radially from the center piece 18 and are engaging corresponding grooves 26 in the radially inner portions of the rotor segments 12. During manufacture of this embodiment, the rotor segments 12 are slid onto the protrusions 25 in axial direction and are then held fixedly on the center piece 18 and in exactly defined mutual arrangement, the adjacent segments 12 preferably spaced at a certain distance from each other to define slots 13 as flux barriers between adjacent legs 12a of adjacent segments 12.

### List of reference numerals

- 1: Current-energized synchronous motor
- 2: Stator
- 3: Rotor
- 4: Pole
- 5: Pole shank
- 6: Pole shoe
- 6a: Protrusion
- 6b: Hollow or bore in protrusion
- 7: Winding
- 8: Radial slot
- 9: Wall of the slot
- 10: Outermost point of slot
- 11: Center axis of rotor
- 12: Rotor segment
- 12a: Leg of rotor segment
- 13: Radial slot
- 13a: Inner end portion of slot
- 13b: Outer end portion of slot
- 13c: Recess in slot wall
- 14: Magnetic field lines q direction
- 15: Magnetic field lines d direction
- 16: Permanent magnets
- 17: Hard material
- 17a: Protrusion of hard material
- 18: Center piece of rotor
- 19: Closure element
- 20: Bolt
- 21: Nut
- 22: Rotor sleeve
- 23: Shaped profiles
- 24: Radial elements
- 25: Radial protrusions
- 25a: Ridge on radial protrusions
- 26: Groove

## Claims

1. Rotor (3) for an electrical machine, in particular a current excited synchronous machine, in particular a motor (1), comprising a rotor core with at least two rotor poles (4) with rotor windings thereon, where radial magnetic flux barriers are provided in the poles (4) and these magnetic flux barriers are slots (13) extending radially along the center planes of the poles (4), said barriers composed by any material, including liquids or gases, in particular air, which has a lower magnetic permeability µr than the rotor poles (4), **characterized in that** the radially inner end portion (13a) of the slots (13) is widening up in the direction towards the center axis of the rotor (3).

2. Rotor according to claim 1, **characterized in that** the inner end portions (13a) are widening up essentially continuously towards the center axis of the rotor (3), preferably in essentially triangular or cusp shape.

3. Rotor according to any of claims 1 or 2, **characterized in that** the inner end portions (13a) merge into essentially radial slots (13) of essentially constant width.

4. Rotor according to any of claims 1 to 3, **characterized in that** the outer end portion (13b) of the slots (13) are narrowing in radially outward direction, and are preferably open towards the outside of the rotor (3).

5. Rotor according to any of claims 1 to 4, **characterized in that** at least one magnet, preferably a permanent magnet (16), is arranged inside each of the slots (13), preferably in the central portion thereof.

6. Rotor according to claim 5, **characterized in that** each magnet (16) is oriented dependent from the direction of the field lines in the respective pole (4).

7. Rotor according to any of claims 5 or 6, **characterized in that** the magnetic orientation of the permanent magnets (16) is alternated for adjacent poles (4).

8. Rotor according to any of claims 1 to 7, **characterized in that** the inner end portion (13a) of the slots (13), preferably also an adjacent portion of the slots (13), is filled with solid material (17) with a lower magnetic permeability µr than the rotor poles (4).

9. Rotor according to claim 8, **characterized in that** the solid material (17) is a hard soldering material, cured glue or any other material connecting the rotor poles (4) to the center part (18) of the rotor (3).

10. Rotor according to any of claims 8 or 9, **characterized in that** the solid material (17) forms at least one bulge (17a) essentially perpendicular to the radial direction and engages with corresponding recesses (13c) in the walls of the slots (13) to constitute a form-lock fixing of the rotor poles (4) to the center part (18) of the rotor (3).

11. Rotor according to any of claims 1 to 10, **characterized in that** the rotor poles (4) are composed of at least two approximately U-shaped segments (12) with a high magnetic permeability, e.g.: special steel alloys, each of said segments (12) connected with the adjacent segments (12) at least indirectly, the neighboring legs (12a) of adjacent U-shaped segments (12) together constituting one rotor pole (4), where the adjacent segments (12) are separated a certain distance, the gap between the rotor poles (4) constituting the magnetic flux barriers.

12. Rotor according to any of claims 1 to 11, **characterized in that** at least one bridge is connecting and holding at defined distance the opposing walls of the slots (13), said bridge preferably situated in the center portion of the slot (13).

13. Rotor according to any of claims 1 to 12, **characterized in that** the outer end portions of the legs (12a) of the U-shaped rotor segments (12) are provided with magnetic flux barriers composed by any material, including liquids or gases, in particular air, which has a lower magnetic permeability µr than the other portions of the segments (12).

14. Rotor according to claim 13, **characterized in that** the outer end portions of the legs (12a) of the U-shaped rotor segments (12) show prominent protrusions (6a) towards the opposing leg (12a) of the same rotor segment (12), two adjacent legs (12a) of adjacent rotor segments (12) thereby forming mushroom-shaped pole shoes (6) of the poles (4) of the rotor (3), and the magnetic flux barrier arranged in said outer end protrusions (6a).

15. Rotor according to any of claims 1 to 12, **characterized in that** radial elements (24) are provided on the center piece (18) or as parts of a pack of sheet metal supported by or defining the center piece (18), at least one of these radial elements (24) passing through each of the slots (13) between adjacent rotor segments (12) to the outer perimeter of the rotor (3), the distance between the rotor segments (12) and the radial elements (24) widening towards the center of the rotor (3) near the inner end of the slots (13) and preferably narrowing in radially outward direction, with a small gap (13b) remaining at the outer perimeter of the rotor (3).
